# EUROPÄISCHE PATENTSCHRIFT

(11) **EP 2 834 099 B1**
(45) Veröffentlichungstag und Bekanntmachung des Hinweises auf die Patenterteilung: **13.01.2016**
(21) Anmeldenummer: 13701566.5
(22) Anmeldetag: 17.01.2013
(51) Int. Cl.: B60N 2/46

(54) **VERSTELLVORRICHTUNG FÜR EIN SCHWENKBARES KOMFORTELEMENT, INSBESONDERE FÜR EINE ARMLEHNE EINES FAHRZEUGS**
ADJUSTING DEVICE FOR A PIVOTABLE COMFORT ELEMENT, IN PARTICULAR FOR AN ARMREST OF A VEHICLE
DISPOSITIF DE RÉGLAGE POUR UN ÉLÉMENT PIVOTANT DE CONFORT, EN PARTICULIER POUR UN ACCOUDOIR DE VÉHICULE

(30) Priorität: 03.04.2012 DE 102012006773
(43) Veröffentlichungstag der Anmeldung: 11.02.2015
(73) Patentinhaber: Audi AG, 85045 Ingolstadt (DE)
(72) Erfinder: BÖHNER, Jan, 91052 Erlangen (DE); LANG, Heinz, 85098 Großmehring (DE); SCHULZE, Markus, 93326 Abensberg (DE)
(74) Vertreter: Mader, Wilfried
(86) Internationale Anmeldenummer: PCT/EP2013/000117
(87) Internationale Veröffentlichungsnummer: WO 2013/149691

(56) Entgegenhaltungen:
- DE-A1-102006 048 107
- DE-A1-102009 057 536

## Beschreibung

Die Erfindung betrifft eine Verstellvorrichtung für ein gegenüber einer Tragstruktur schwenkbares Komfortelement, insbesondere für eine Armlehne eines Fahrzeugs gemäß Oberbegriff des Patentanspruchs 1.

Eine gattungsbemäße Verstellvorrichtung zur Verstellung einer schwenkbaren Armlehne bzw. Armauflage ist bspw. aus der DE 10 2006 048 107 A1 bekannt. Diese Vorrichtung weist eine Rasteinrichtung auf, welche aus einem ersten, mit einer schwenkbaren Armlehne verbundenen Rastelement mit einer Verzahnung und einem zweiten, ebenfalls eine Verzahnung aufweisenden zweiten Rastelement aufgebaut ist. Das zweite Rastelement wird schwenkbar in einer Eingriffsstellung mit der Verzahnung des ersten Rastelements federkraftbelastet gehalten. Die Profile der beiden Verzahnungen sind dabei so ausgeführt, dass ein ratschenartiges Aufschwenken der Armlehne ermöglicht wird, jedoch ein Rückschwenken von den Verzahnungen abgestützt wird.

Solche Armlehnen können auch längenverstellbar ausgebildet werden, wie dies bspw. aus der DE 199 15 469 A1 bekannt ist und zusätzlich mit einem unter der verschwenkbaren Armlehne angeordneten Ablageraum ausgestattet sein.

Um die Kraftfahrzeugsicherheitsstands (FMVSS 201) der National Highway Traffic Safety Administration (NHTSA) hinsichtlich höhen- und längsverstellbaren Armlehnen zu erfüllen, müssen diese freischwebend oder bei darunterliegender Ablagemöglichkeit zusätzlich verriegelt werden.

Bei den oben genannten bekannten Verstellvorrichtungen für Armlehnen eines Kraftfahrzeugs ist diese Bedingung nicht erfüllt, d. h. bei entsprechend auftretenden Beschleunigung im Falle eine Unfalles kann die Armlehne eine unkontrollierte Schwenkbewegung ausführen, so dass dadurch die in einem unter der Armlehne angeordneten Ablageraum verstauten Gegenstände im Innenraum des Fahrzeugs umherfliegen können und daher eine nicht unerhebliche Verletzungsgefahr für Fahrzeuginsassen darstellen würden.

Aufgabe der Erfindung ist es daher, eine Verstellvorrichtung der eingangs gennannten Art derart weiterzubilden, die eine unkontrollierte Aufschwenkbewegung eines Komfortelementes, insbesondere einer Armlehne eines Fahrzeugs zuverlässig verhindert und einen einfachen konstruktiven Aufbau aufweist.

Diese Aufgabe wird gelöst durch eine Verstellvorrichtung mit den Merkmalen des Patentanspruchs 1.

Eine solche Verstellvorrichtung für ein gegenüber einer Tragstruktur schwenkbares Komfortelement, insbesondere für eine Armlehne eines Fahrzeug mit einer durch Verstellen des Komfortelementes betätigbaren Rasteinrichtung, welche einen mit dem Komfortelement verbundenen Rastarm und einen in Wirkverbindung mit dem Rastarm stehenden Rasthebel umfasst, zeichnet sich erfindungsgemäß dadurch aus, dass zum Verriegeln einer Schwenkposition des Komfortelementes ein an dem Rastarm schwenkbar angelenkter Verriegelungshebel mit einem Eingriffsabschnitt vorgesehen ist, welcher die Schwenkposition in einer Eingriffsposition des Eingriffsabschnittes mit einem Verriegelungsabschnitt eines tragstrukturfesten Verriegelungselementes federkraftverriegelt und zum Entriegeln der Schwenkposition des Komfortelementes eine Betätigungseinrichtung vorgesehen ist, mittels welcher der Verriegelungshebel aus der Eingriffsposition mit dem Verriegelungselement ausrückbar ist.

Erfindungsgemäß sind lediglich ein Verriegelungshebel und ein Verriegelungselement erforderlich, um jede Schwenkposition des Komfortelementes, insbesondere einer Armlehne zu verrasten. Die Verriegelung erfolgt durch den Verriegelungshebel, indem dieser federkraftbelastet in einer Eingriffsposition mit dem Verriegelungselement gehalten wird. Bei aufgeschwenkten Komfortelement, insbesondere bei einer aufgeschwenkten Armlehne ist der erfindungsgemäße Verriegelungsmechanismus nicht sichtbar, lediglich die Betätigungseinrichtung.

Ein Aufschwenken des Komfortelementes, insbesondere der Armlehne ist nur durch eine Betätigung der Betätigungseinrichtung möglich, wodurch der Verriegelungshebel aus der Eingriffsposition mit dem Verriegelungselement ausgeschwenkt bzw. ausgerückt wird. Aufgrund des federbelasteten Verriegelungshebels schwenkt dieser nach dem Ende einer Betätigung der Betätigungseinrichtung wieder in eine Verriegelungsposition zurück, die der aktuellen Schwenkposition des Komfortelementes bzw. der Armlehne entspricht. Damit ist ein Verschwenken des Komfortelementes, insbesondere eine Höhenverstellung der Armlehne ohne eine Betätigung der Betätigungseinrichtung nicht möglich, so dass ein unter der Armlehne angeordnetes Ablagefach durch ein unkontrolliertes Aufschwenken der Armlehne, bspw. durch hohe auftretende Beschleunigungen nicht geöffnet wird.

Besonders vorteilhaft ist es gemäß einer Ausgestaltung der Erfindung, wenn der Verriegelungshebel und das Verriegelungselement derart ausgebildet sind, dass jede Eingriffsposition des Verriegelungshebels mit dem Verriegelungselement mit einer Rastposition der Rasteinrichtung korreliert. Damit ist eine Verriegelung nur soweit möglich, wie das Komfortelement schwenkbar ist, bzw. wie eine Armlehne aufgeschwenkt werden kann. Vorzugsweise sind hierzu der Verriegelungshebel und das Verriegelungselement mit einer der Anzahl der Rastpositionen entsprechenden Anzahl von Eingriffspositionen ausgebildet. Damit kann auch der konstruktive Aufbau der erfindungsgemäßen Verstellvorrichtung einfach gehalten werden.

Nach einer weiteren Ausgestaltung der Erfindung sind der Eingriffsabschnitt des Verriegelungshebels und der Verriegelungsabschnitt des Verriegelungselements jeweils mit einer Segmentzahnung ausbildet. Vorzugsweise sind dabei die Segmentzahnung des Verriegelungshebels mit nur einem Verriegelungszahn und die Segmentzahnung des Verriegelungsabschnittes mit einer der Anzahl der Rastpositionen der Rasteinrichtung entsprechenden Anzahl von Segmentzähnen ausgebildet. Mit solchen Segmentzahnungen ergibt sich eine hohe Funktionssicherheit, d. h. dass immer eine sichere Verzahnung der beteiligten Eingriffs- und Verriegelungsabschnitte sichergestellt ist.

Besonders vorteilhaft ist es gemäß einer Ausgestaltung der Erfindung, wenn das Profil des Verriegelungszahns des Verriegelungshebels und das Profil der Segmentzähne des Verriegelungselementes derart ausgebildet sind, dass eine Aufschwenkbewegung des Komfortelementes gesperrt ist, aber eine Rückschwenkbewegung ermöglicht wird. Damit ist ein Herabschwenken einer Armlehne in die unterste Schwenkposition immer möglich.

In einer weiteren Ausgestaltung der Erfindung ist es vorgesehen, dass zur Bildung der Rasteinrichtung der Rastarm eine Rastverzahnung aufweist und ein an der Tragstruktur angelenkter als Ratschenhebel ausgebildeter Rasthebel mit einem Eingriffsprofil vorgesehen ist, welcher federkraftbelastet in die Rastverzahnung eingreift. Vorzugsweise sind das Profil der Rastverzahnung und das Eingriffsprofil des Rasthebels derart ausgebildet, dass bei einem Rasteingriff und bei ausgerücktem Verriegelungshebel eine Aufschwenkbewegung des Komfortelements möglich ist, jedoch eine Rückschwenkbewegung des Komfortelements abgestützt wird.

Besonders vorteilhaft ist es gemäß einer Weiterbildung der Erfindung, wenn die Betätigungseinrichtung zur Entriegelung der Schwenkposition des Komfortelementes einen Bowdenzug umfasst. Vorzugsweise ist die Betätigungseinrichtung mit einer Betätigungstaste derart ausgebildet, dass der Betätigungsweg der Betätigungstaste mittels einer Umlenkkinematik in eine Rotationsbewegung einer Teleskopstange des Komfortelementes umgesetzt wird, deren Rotationsbewegung mittels einer weiteren Umlenkkinematik in eine Zugbewegung des Bowdenzugs transformiert wird. Mit einer solchen Teleskopstange zur Übertragung der Tastenbetätigung kann das Komfortelement, also insbesondere eine Armlehne längenverstellbar ausgebildet werden.

Die Erfindung wird nachfolgend anhand eines Ausführungsbeispiels unter Bezugnahme auf die beigefügten Figuren ausführlich beschrieben. Es zeigen:
- Figur 1: eine Seitenansicht einer erfindungsgemäßen Verstellvorrichtung für eine verschwenkbar Armlehne eines Kraftfahrzeuges,
- Figur 2: eine perspektivisch Darstellung der Verstellmechanik der Verstellvorrichtung nach Figur 1, und
- Figur 3: eine perspektivische Darstellung des Betätigungsmechanismus des Verriegelungsmechanismus der Verstellvorrichtung nach Figur 1.

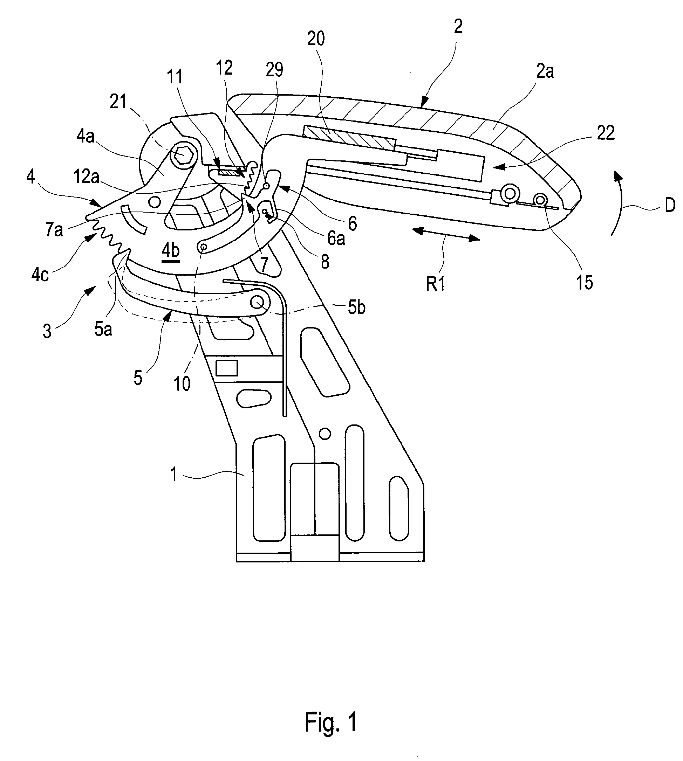

Eine Armlehne 2 als Komfortelement mit einer Armauflage 2a, die als Mittelarmlehne für die Vordersitze eines Fahrzeugs, insbesondere eines Kraftfahrzeugs ausgebildet ist, zeigt Figur 1. Unter der Armlehne 2 befindet sich ein Ablagefach (in Figur 1 nicht dargestellt), welches von der Armlehne 2 verschlossen wird.

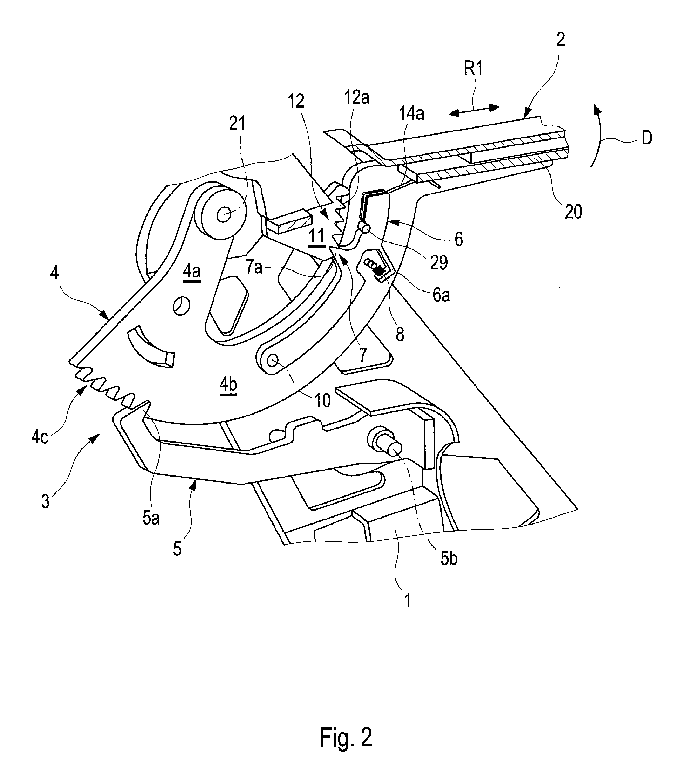

Die Armlehne 2 umfasst gemäß den Figuren 1 und 2 eine Trägerplatte 20, auf der die Armauflage 2a als auch eine Längsverstellkinematik 22 zur Längsverstellung der Armauflage 2a gemäß des Doppelpfeils R1angeordnet ist, wobei diese Längsverstellkinematik 22 im Folgenden nicht weiter erläutert wird.

Die Trägerplatte 20 wird gemäß Figur 2 über zwei parallel angeformte Rastarme 4 schwenkbar mit einer Tragstruktur 1 verbunden, wobei diese beiden Rastarme 4 jeweils mit einem Drehhebel 4a und einem diesen Drehhebel 4a mit der Trägerplatte 20 verbindenden kreisförmigen Abschnitt 4b ausgebildet sind. Diese beiden Rastarme 4 sind in jeweils von der Tragstruktur 1 aufgenommenen Schwenkachsen 21 der Drehhebel 4a schwenkbar gelagert, so dass die Armlehne 2 aus einer Ausgangslage entsprechend den Darstellungen in den Figuren 1 und 2 in eine Schwenkrichtung D schwenkbar sind, so dass gleichzeitig das unter der Armlehne 2 liegende Ablagefach (nicht dargestellt) geöffnet und von einem Fahrzeuginsassen zugänglich wird.

Zum Verschwenken der Armlehne 2 aus der Ausgangslange ist eine Rasteinrichtung 3 vorgesehen, die aus einer stirnseitig des Rasthebels 4 in radialer Richtung von dessen Drehhebel 4a angeordneter Rastverzahnung 4c und einem Rasthebel 5 mit einem als Rastzahn ausgebildeten Eingriffsprofil 5a besteht. Der Rasthebel 5 greift über den Rastzahn 5a in die Rastverzahnung 4c ein, wobei durch die Anzahl der Zahnlücken dieser Rastverzahnung 4c die Anzahl der Schwenkpositionen der Armlehne 2 bestimmt wird und dadurch auch deren Winkelneigung.

Der Rasthebel 5 ist in einer Drehachse 5b an der Tragstruktur 1 schwenkbar angelenkt und wird von einem Federelement (nicht dargestellt) in einer Eingriffsstellung mit der Rastverzahnung 4c gehalten, so dass der Rastzahn 5a in eine der Zahnlücken der Rastverzahnung 4c des Rastarmes 4 eingreift. Die Profile der Rastverzahnung 4c und des Rastzahnes 5a sind so ausgeführt, dass beim Hochschwenken der Armlehne 2 der Rasthebel 5 mit dem Rastzahn 5a ratschenartig aus der Rastverzahnung 4c heraus schwenkt und entsprechend der durch die Zahnweite der Rastverzahnung bestimmten schrittweisen Verstellung wieder in eine Zahnlücke einrastet.

Da jede von der Armlehne 2 eingenommene Schwenkposition mittels eines Verriegelungshebels 6 und eines Verriegelungselementes 11 verriegelt wird, ist erst nach einer Entriegelung der Schwenkposition eine Aufschwenkbewegung der Armlehne 2, bspw. aus der in den Figuren 1 und 2 dargestellten untersten Position möglich.

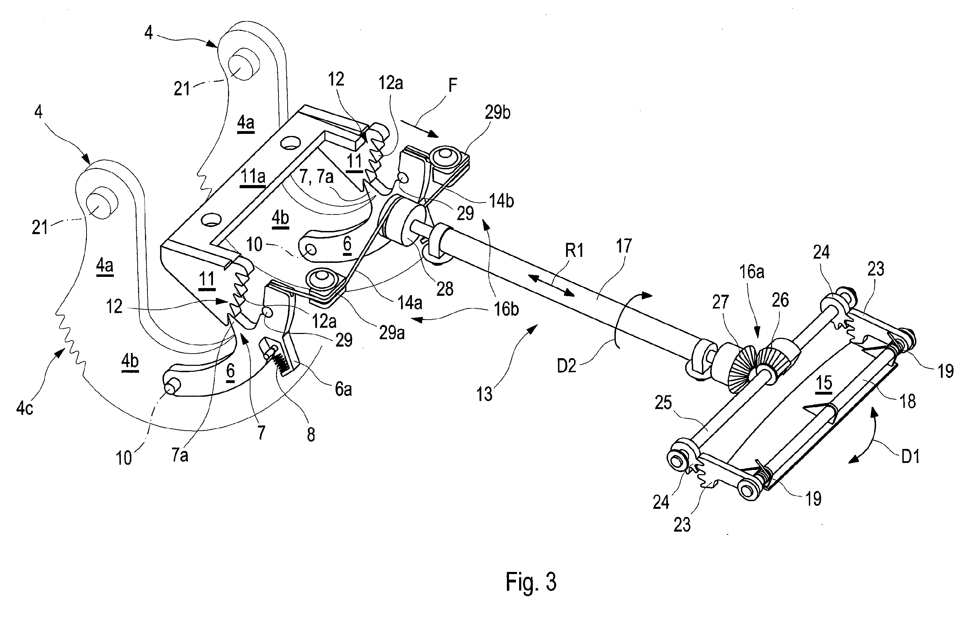

Insbesondere aus Figur 3 ist ersichtlich, dass jeweils ein Verriegelungshebel 6 schwenkbar mittels einer Drehachse 10 auf beiden Rastarmen 4, nämlich auf dessen kreisförmigen Abschnitt 4b gelagert und an den bogenförmigen Verlauf dieses Abschnittes 4b angepasst ist. Jeder dieser Verriegelungshebel 6 greift über einen als Segmentzahnung ausgeführten Eingriffsabschnitt 7 in einen ebenso als Segmentzahnung ausgeführten Verriegelungsabschnitt 12 eines mit der Tragstruktur 1 verbundenen Verriegelungselementes 11 ein und wird von einer Rückstellfeder 8, welches an einem Haltearm 6a des Verriegelungshebels 6 angebunden ist, in dieser Eingriffsposition gegen das Verriegelungselement 11 gedrückt.

Die beiden Verriegelungselemente 11 mit ihren als Segmentzahnung ausgeführten Verriegelungsabschnitt 12 sind gemäß Figur 3 über eine stegartige Verbindungsplatte 11a miteinander verbunden und über diese Verbindungsplatte 11a an der Tragstruktur 1 montiert.

Die Segmentzahnung 7 des Verriegelungshebels 6 ist als Verriegelungszahn 7a ausgebildet und rastete zur Verriegelung einer Schwenkposition der Armlehne 2 in eine der von Segmentzähnen 12a der Segmentzahnung 12 des Verriegelungselementes 11 gebildeten Zahnlücken dann ein, wenn auch der Rasthebel 5 der Rasteinrichtung 4 mittels seines Rastzahnes 5a in eine der Zahnlücken der Rastverzahnung 4c des Rastarmes 4 eingreift. Daher sind die beiden Verriegelungshebel 6 und die zugehörigen Verriegelungselemente 11 so ausgebildet, dass die Eingriffspositionen der Verriegelungshebel 6, bei denen jeweils der Verriegelungszahn 5a in die Segmentzahnung 12 des Verriegelungselement 11 eingreift, den durch den Rasthebel 5 und der Rastverzahnung 4c definierten Rastpositionen entsprechen.

Die Profile des Verriegelungszahnes 7a der Verriegelungshebel 6 und der Segmentzahnung 12 der Verriegelungselemente 11 sind derart geformt, dass in der Eingriffsposition der Verriegelungshebel 6 eine Aufschwenkbewegung der Armlehne 2 nicht möglich ist, jedoch eine Abwärtsbewegung zugelassen wird.

Damit wird sichergestellt, dass bei Auftreten von hohen Beschleunigungen ein unkontrolliertes Aufschwenken der Armlehne 2 verhindert wird und daher aus einem unter der Armlehne 2 liegenden Ablagefach (in den Figuren nicht dargestellt) ein Herausfallen von Gegenständen nicht möglich ist.

Zur Entriegelung einer Schwenkposition der Armlehne 2 müssen daher beide Verriegelungshebel 6 jeweils aus ihrer Eingriffsposition ausgerückt werden, so dass deren Verriegelungszahn 7a nicht mehr in Eingriff mit der Segmentzahnung 12 der Verriegelungselemente 11 steht. Hierzu weist die erfindungsgemäße Verstellvorrichtung eine Betätigungseinrichtung 13 auf, bei der durch die Betätigung einer Betätigungstaste 15 ein Ausrücken der beiden Verriegelungshebels 6 aus jeweils ihrer Eingriffsposition bewirkt wird.

Der Aufbau und die Funktionsweise dieser Betätigungseinrichtung 13 werden im Folgenden anhand von Figur 3 erläutert.

Die flügelartige Betätigungstaste 15 ist mit einer Drehachse 18 am vorderen Ende der Armlehne 2 quer zur Schwenkrichtung D gelagert und weist endseitig jeweils eine Rückstellfeder 19 auf, die die Betätigungstaste 15 in ihrer Nichtbetätigungssstellung hält.

Durch eine Betätigung der Betätigungstaste 15 wird deren Schwenkbewegung D1 über eine Umlenkkinematik 16a in eine Drehbewegung D2 der Teleskopstange 17 übersetzt. Diese Umlenkkinematik 16a umfasst endseitig der Drehachse 18 angeordnete Zahnsegmente 23, die in endseitig einer weiteren Drehachse 25 angeordnete Zahnsegmente 24 eingreift, wobei die weitere Drehachse 25 parallel zur Drehachse 18 verläuft. Ein Kegelradgetriebe der Umlenkkinematik 16a umfasst ein auf der Drehachse 25 angeordnetes Kegelrad 26 und ein an der Teleskopstange 17 endseitig montiertes Kegelrad 27, so dass die von den Zahnsegmenten 23 über die Zahnsegmente 24 auf die Drehachse 25 übertragene Drehbewegung auf die Teleskopstange 17 übertragen wird. Mit der Längsverstellung der Armauflage 2a wird auch die Länge der Teleskopstange 17 in Richtung des Doppelpfeils R1 verlängert oder verkürzt, wobei gleichzeitig die Drehbewegung nicht behindert wird.

Die durch Betätigen der Betätigungstaste 15 initiierte Drehbewegung D2 der Teleskopstange 17 wird mittels einer weiteren Umlenkkinematik 16b in eine Zugbewegung F eines Bowdenzuges 14a und 14b auf die beiden Verriegelungshebel 6 umgesetzt, wodurch deren Ausschwenken aus deren Eingriffsposition mit dem jeweiligen Verriegelungselement 11 bewirkt wird.

Diese Umlenkkinematik 16b umfasst eine endseitig der Teleskopstange 17 angeordnete Bowdenzugrolle 28, von der ein Bowdenzug 14a über eine Umlenkrolle 29a mit dem einen Verriegelungshebel 6 und ein weiterer Bowdenzug 14b über eine weitere Umlenkrolle 29b mit dem anderen Verriegelungshebel 6 verbunden ist. Die beiden Bowdenzüge 14a und 14b verlaufen von der Bowdenzugrolle 28 aus senkrecht zur Teleskopstange 17 und werden dann von den Umlenkrollen 29a und 29b in die Schwenkebene der beiden Verriegelungshebel 6 umgelenkt. Das Ende eines Bowdenzuges 14a bzw. 14b wird am drehachsenabgewandten Ende des Verriegelungshebels 6 über eine stirnseitige Nut geführt, so dass ein das Ende des Bowdenzuges 14a bzw. 14b bildender Zapfen 29 in einer hierfür vorgesehenen Aufnahme des Verriegelungshebels 6 gelagert wird.

Wie oben bereits ausgeführt, wird eine Aufschwenkbewegung der Armlehne 2 erst möglich, wenn durch eine Betätigung der Betätigungstaste 15 die beiden Verriegelungshebel 6 aus ihrer Eingriffsposition mit dem Verriegelungselement 11 ausgerückt werden. Nachdem die Betätigungstaste 15 nach einem Aufschwenken der Armlehne 2 nicht mehr betätigt wird, bewirkt die Rückstellfeder 8 wieder ein Einrücken der beiden Verriegelungshebel 6 in ihre Eingriffsposition mit dem Verriegelungselement 11 in der entsprechenden Schwenkposition. Eine weitere Höhenverstellung ist ohne eine Betätigung der Betätigungstaste 15 nicht möglich. Ferner erfolgt eine Verriegelung der Schwenkposition der Armlehne 2 nur in dem von der Rasteinrichtung 3 definierten Schwenkbereich.

Die Profile des Verriegelungszahns 7a des Verriegelungshebels 7 und der Segmentzahnung 12 des Verriegelungselementes 11 sind so ausgeführt, dass ein Herabschwenken aus einer von der Rasteinrichtung 3 vorgegebenen Schwenkposition der Armlehne 2 in die unterste Schwenkposition in der Art einer Ratsche möglich ist, wenn gleichzeitig auch die Rasteinrichtung 3 in einen Zustand gebracht wird, bei dem der Rasthebel 5 von der Rastverzahnung 4c abgehoben ist. Diese Kinematik ist in den Figuren 1 und 2 nicht dargestellt, jedoch aus dem Stand der Technik bekannt.

Mit einer solchen Kinematik ist es möglich, zum Rückschwenken der Armlehne 2 diese zunächst bis zum größten Schwenkwinkel zu verschwenken, wodurch ein Abheben des Rasthebels 5 von der Rastverzahnung 4c bewirkt wird und dadurch die Armlehne 2 wieder in ihre Ausgangslage zurückverschwenkt werden kann.

Durch eine zusätzliche Steuerkinematik (in den Figuren nicht dargestellt) kann der Verriegelungshebel 6 aus seiner Eingriffsposition mit dem Verriegelungselement 11 gebracht werden, um beim Herabschwenken der Armlehne 2 Ratschengeräusche zu vermeiden.

Durch die Verwendung einer Teleskopstange 17 zur Übertragung der Entriegelungsbewegung der Betätigungstaste 15 ist die Armlehne 2 längenverstellbar. Die gesamte erfindungsgemäße Verstellvorrichtung zur Verrieglung der Schwenkpositionen der Armlehne 2 kann bauraumsparend realisiert werden, ohne dass entsprechende Bauteile für eine Bedienperson von außen sichtbar sind.

Mit der erfindungsgemäßen Verstellvorrichtung für eine Armlehne, die gleichzeitig auch als Abdeckung für ein darunter angeordnetes Ablagefach dient, wird der in USA geforderte Kraftfahrzeugsicherheitsstand (FMVSS 201) der National Highway Traffic Safety Administration (NHTSA) erfüllt, wonach höhen- und längsverstellbaren Armlehnen verriegelt werden müssen.

Ein weiterer Vorteil der erfindungsgemäßen Verstellvorrichtung besteht darin, dass der entsprechende Verriegelungsmechanismus für einen Fahrzeuginsassen nicht sichtbar ist und daher der optische Eindruck der Armlehne nicht beeinträchtigt wird.

### Bezugszeichen

- 1: Tragstruktur
- 2: Komfortelement, Armlehne
- 2a: Armauflage der Armlehne 2
- 3: Rasteinrichtung
- 4: Rastarm der Rasteinrichtung 3
- 4a: Drehhebel des Rastarmes 4
- 4b: kreisförmigen Abschnitt des Rastarmes 4
- 4c: Rastverzahnung des Rastarmes 4
- 5: Rasthebel der Rasteinrichtung
- 5a: Eingriffsprofil, Rastzahn des Rasthebels 5
- 5b: Drehachse des Rasthebels 5
- 6: Verriegelungshebel
- 6a: Haltearm des Verriegelungshebels 6
- 7: Eingriffsabschnitt, Segmentzahnung des Verriegelungshebels 6
- 7a: Verriegelungszahn des Verriegelungshebels 6
- 8: Rückstellfeder
- 9: Drehachse des Verriegelungshebels 6
- 10: Verriegelungselement
- 11a: Verbindungsplatte der Verriegelungselemente 11
- 11: Verriegelungsabschnitt, Segmentzahnung des Verriegelungselementes
- 12a: Segmentzahn der Segmentzahnung
- 12: Betätigungseinrichtung
- 14a: Bowdenzug der Betätigungseinrichtung
- 14b: Bowdenzug der Betätigungseinrichtung
- 15: Betätigungstaste.
- 16a: Umlenkkinematik
- 16b: Umlenkkinematik
- 17: Teleskopstange
- 18: Drehachse
- 19: Rückstellfeder
- 20: Trägerplatte der Armlehne 2

- 21: Schwenkachse
- 22: Längsverstellkinematik der Armlehne 2
- 23: Zahnsegment
- 24: Zahnsegment
- 25: Drehachse
- 26: Kegelrad
- 27: Kegelrad
- 28: Bowdenzugrolle
- 29: Zapfen des Bowdenzugs 14a, 14b

## Patentansprüche

1. Verstellvorrichtung für ein gegenüber einer Tragstruktur (1) schwenkbares Komfortelement (2), insbesondere für eine Armlehne eines Fahrzeug mit einer durch Verstellen des Komfortelementes (2) betätigbaren Rasteinrichtung (3), welche einen mit dem Komfortelement (2) verbundenen Rastarm (4) und einen in Wirkverbindung mit dem Rastarm (4) stehenden Rasthebel (5) umfasst,
**dadurch gekennzeichnet, dass**
- zum Verriegeln einer Schwenkposition des Komfortelementes (2) ein an dem Rastarm (4) schwenkbar angelenkter Verriegelungshebel (6) mit einem Eingriffsabschnitt (7) vorgesehen ist, welcher die Schwenkposition in einer Eingriffsposition des Eingriffsabschnittes (7) mit einem Verriegelungsabschnitt (12) eines tragstrukturfesten Verriegelungselementes (11) federkraftverriegelt, und
- zum Entriegeln der Schwenkposition des Komfortelementes (2) eine Betätigungseinrichtung (13) vorgesehen ist, mittels welcher der Verriegelungshebel (6) aus der Eingriffsposition mit dem Verriegelungselement (11) ausrückbar ist.

2. Verstellvorrichtung nach Anspruch 1,
**dadurch gekennzeichnet, dass** der Verriegelungshebel (6) und das Verriegelungselement (11) derart ausgebildet sind, dass jede Eingriffsposition des Verriegelungshebels (6) mit dem Verriegelungselement (11) mit einer Rastposition der Rasteinrichtung (3) korreliert.

3. Verstellvorrichtung nach Anspruch 1 oder 2,
**dadurch gekennzeichnet, dass** der Verriegelungshebel (6) und das Verriegelungselement (11) mit einer der Anzahl der Rastpositionen der Rasteinrichtung (3) entsprechenden Anzahl von Eingriffspositionen ausgebildet sind.

4. Verstellvorrichtung nach einem der vorhergehenden Ansprüche
**dadurch gekennzeichnet, dass** der Eingriffsabschnitt (7) des Verriegelungshebels (6) und der Verriegelungsabschnitt (12) des Verriegelungselements (11) jeweils mit einer Segmentzahnung ausbildet sind.

5. Verstellvorrichtung nach Anspruch 4,
**dadurch gekennzeichnet, dass** die Segmentzahnung (7) des Verriegelungshebels einen Verriegelungszahn (7a) aufweist, und
- die Segmentzahnung (12) des Verriegelungsabschnittes mit einer der Anzahl der Rastpositionen der Rasteinrichtung (3) entsprechenden Anzahl von Segmentzähnen (12a) ausgebildet ist.

6. Verstellvorrichtung nach Anspruch 4 oder 5,
**dadurch gekennzeichnet, dass** das Profil des Verriegelungszahnes (7a) des Verriegelungshebels (6) und das Profil der Segmentzähne (12a) des Verriegelungselementes (11) ausgebildet sind eine Aufschwenkbewegung des Komfortelementes (2) zu sperren und dessen Rückschwenkbewegung zu ermöglichen.

7. Verstellvorrichtung nach einem der vorhergehenden Ansprüche,
**dadurch gekennzeichnet, dass** zur Bildung der Rasteinrichtung (3) der Rastarm (4) eine Rastverzahnung (4a) aufweist und ein an der Tragstruktur (1) angelenkter Rasthebel (5) mit einem Eingriffsprofil (5a) vorgesehen ist, welcher federkraftbelastet in die Rastverzahnung (4a) eingreift.

8. Verstellvorrichtung nach Anspruch 7,
**dadurch gekennzeichnet, dass** das Profil der Rastverzahnung (4a) des Rastarmes (4) und das Eingriffsprofil (5a) des Rasthebels (5) derart ausgebildet sind, dass bei einem Rasteingriff und bei ausgerücktem Verriegelungshebel (6) eine Aufschwenkbewegung des Komfortelements (2) ermöglicht und eine Rückschwenkbewegung des Komfortelements (2) abgestützt wird.

9. Verstellvorrichtung nach einem der vorhergehenden Ansprüche,
**dadurch gekennzeichnet, dass** die Betätigungseinrichtung (13) einen Bowdenzug (14a, 14b) umfasst.

10. Verstellvorrichtung nach Anspruch 9,
**dadurch gekennzeichnet, dass** die Betätigungseinrichtung (13) mit einer Betätigungstaste (15) ausgebildet ist, derart, dass der Betätigungsweg der Betätigungstaste (15) mittels einer Umlenkkinematik (16a) in eine Rotationsbewegung einer Teleskopstange (17) des Komfortelementes (2) umgesetzt wird, deren Rotationsbewegung mittels einer weiteren Umlenkkinematik (16b) in eine Zugbewegung des Bowdenzugs (14a, 14b) umgesetzt wird.

## Claims

1. Adjusting device for a comfort element (2), more particularly an armrest of a motor vehicle which can be swivelled with regard to a bearing structure (1), with a ratchet device (3) which can be operated by adjusting the comfort element (2) and which comprises a ratchet arm (4) connected to the comfort element (2) and a ratchet lever (5) which is in effective connection with the ratchet arm (4)
**characterised in that**
- to lock a swivel position of the comfort element (2), a locking lever (6), which is hinged in a swivelling manner on the ratchet arm (4) and has an engagement section (7), is provided, which spring locks the swivel position in an engagement position of the engagement section (7) with a locking section (12) of a locking element (11) firmly attached to the bearing structure and
- to unlock the swivel position of the comfort element (2) an operating device (13) is provided by means of which the locking lever (6) can be retracted from the engagement position with the locking element (11).

2. Adjusting device according to claim 1
**characterised in that** the adjusting lever (6) and the locking element (11) are designed in such a way that each engagement position of the locking lever (6) with the locking element (11) correlates to a ratchet position of the ratchet device (3).

3. Adjusting device according to claim 1 or 2
**characterised in that** the locking lever (6) and the locking element (11) are designed with a number of engagement positions corresponding with the number of ratchet positions of the ratchet device (3).

4. Adjusting device according to any one of the preceding claims
**characterised in that** the engagement section (7) of the locking lever (6) and the locking section (12) of the locking element (11) are each designed with segment toothing.

5. Adjusting device according to claim 4
**characterised in that** the segment toothing (7) of the locking lever has a locking tooth (7a) and
- the segment toothing (12) of the locking section is designed with a number of segment teeth (12a) corresponding to the number of ratchet positions of the ratchet device (3).

6. Adjusting device according to claim 4 or 5
**characterised in that** the profile of the locking tooth (7a) of the locking lever (6) and the profile of the segment teeth (12a) of the locking element (11) are designed to block an upwards swivelling movement of the comfort element (2) and to allow it to be swivelled back.

7. Adjusting device according to any one of the preceding claims
**characterised in** to form the ratchet device (3) the ratchet arm (4) has ratchet toothing (4a) and ratchet lever (5) hinged on the bearing structure (1) is provided with an engagement profile (5a) which engages in the ratchet toothing (4a) through spring force.

8. Adjusting device according to claim 7
**characterised in that** the profile of the ratchet toothing (4a) of the ratchet arm (4) and the engagement profile (5a) of the ratchet lever (5) are designed in such a way that in the event of ratchet engagement and disengagement of the locking lever (6) an upward swivelling movement of the comfort element (2) is permitted and a return swivelling movement of the comfort element (2) is blocked.

9. Adjusting device according to any one of the preceding claims
**characterised in that** the operating device (13) comprises a Bowden cable (14a, 14b).

10. Adjusting device according to claim 9
**characterised in that** the operating device (13) is provided with an operating button (15) so that the operating path of the operating button (15) is converted by a deflection kinematic system (16a) into a rotational movement of a telescopic rod (17) of the comfort element (2), the rotational movement of which is converted by means of a further deflection kinematic system (16b) into a pulling movement of the Bowden cable (14a, 14b).

## Revendications

1. Dispositif de réglage pour un élément de confort (2) pivotant par rapport à une structure porteuse (1), notamment pour un accoudoir d'un véhicule avec un dispositif d'enclenchement (3) qui peut être actionné par réglage de l'élément de confort (2) et qui comprend un bras d'enclenchement (4) relié à l'élément de confort (2) et un levier d'enclenchement (5) en liaison active avec le bras d'enclenchement (4),
**caractérisé en ce que**
- pour verrouiller une position de pivotement de l'élément de confort (2), il est prévu un levier de verrouillage (6), avec une partie de prise (7), qui est articulé de marnière à pouvoir pivoter sur le bras d'enclenchement (4) et qui verrouille par une force de ressort la position de pivotement dans une position de prise de la partie de prise (7) avec une partie de verrouillage (12) d'un élément de verrouillage (11) solidaire avec la structure porteuse, et
- pour déverrouiller la position de pivotement de l'élément de confort (2), il est prévu un dispositif d'actionnement (13) au moyen duquel le levier de verrouillage (6) peut être sorti de la position de prise avec l'élément de verrouillage (11).

2. Dispositif de réglage selon la revendication 1, **caractérisé en ce que** le levier de verrouillage (6) et l'élément de verrouillage (11) sont conçus de telle sorte que chaque position de prise du levier de verrouillage (6) avec l'élément de verrouillage (11) est corrélée avec une position d'enclenchement du dispositif d'enclenchement (3).

3. Dispositif selon la revendication 1 ou 2, **caractérisé en ce que** le levier de verrouillage (6) et l'élément de verrouillage (11) sont conçus avec un nombre de positions de prise qui correspond au nombre des positions d'enclenchement du dispositif d'enclenchement (3).

4. Dispositif selon l'une des revendications précédentes, **caractérisé en ce que** la partie de prise (7) du levier de verrouillage (6) et la partie de verrouillage (12) de l'élément de verrouillage (11) sont conçues chacune avec un segment denté.

5. Dispositif selon la revendication 4, **caractérisé en ce que**
- le segment denté (7) du levier de verrouillage comporte une dent de verrouillage (7a), et
- le segment denté (12) de la partie de verrouillage est conçu avec un nombre de dents de segment (12a) qui correspond au nombre des positions d'enclenchement du dispositif d'enclenchement (3).

6. Dispositif de réglage selon la revendication 4 ou 5, **caractérisé en ce que** le profil de la dent de verrouillage (7a) du levier de verrouillage (6) et le profil des dents de segment (12a) de l'élément de verrouillage (11) sont conçus pour bloquer un mouvement de pivotement ouvrant de l'élément de confort (2) et pour permettre son mouvement de pivotement en arrière.

7. Dispositif de réglage selon l'une des revendications précédentes, **caractérisé en ce que**, pour former le dispositif d'enclenchement (3), le bras d'enclenchement (4) comporte une denture d'enclenchement (4a) et il est prévu un levier d'enclenchement (5), articulé sur la structure porteuse (1), avec un profil de prise (5a) qui vient en prise dans la denture d'enclenchement (4a) sous l'action d'une force de ressort.

8. Dispositif de réglage selon la revendication 7, **caractérisé en ce que** le profil de la denture d'enclenchement (4a) du bras d'enclenchement (4) et le profil de prise (5a) du levier d'enclenchement (5) sont conçus de telle sorte que, lorsque la prise est enclenchée et que le levier de verrouillage (6) est sorti, un mouvement de pivotement ouvrant de l'élément de confort (2) est permis et un mouvement de pivotement en arrière de l'élément de confort (2) est soutenu.

9. Dispositif de réglage selon l'une des revendications précédentes, **caractérisé en ce que** le dispositif d'actionnement (13) comprend un câble flexible sous gaine (14a, 14b).

10. Dispositif de réglage selon la revendication 9, **caractérisé en ce que** le dispositif d'actionnement (13) est conçu avec un bouton d'actionnement (15) de telle sorte que la course d'actionnement du bouton d'actionnement (15) est transformée au moyen d'un mécanisme cinématique de renvoi (16a) en un mouvement de rotation d'une barre télescopique (17) de l'élément de confort (2) dont le mouvement de rotation est transformé au moyen d'un autre mécanisme cinématique de renvoi (16b) en un mouvement de traction du câble flexible sous gaine (14a, 14b).
